# EUROPEAN PATENT SPECIFICATION

(11) **EP 4 157 512 B1**
(45) Date of publication and mention of the grant of the patent: **01.04.2026**
(21) Application number: 21727881.1
(22) Date of filing: 25.05.2021
(51) Int. Cl.: B01J 19/00, G05B 13/02

(54) **AI-SYSTEM FOR FLOW CHEMISTRY**
AI-SYSTEM FÜR DURCHFLUSSCHEMIE
SYSTÈME IA POUR CHIMIE EN FLUX

(30) Priority: 26.05.2020 EP 20176466
(43) Date of publication of application: 05.04.2023
(73) Proprietor: BASF SE, 67056 Ludwigshafen am Rhein (DE)
(72) Inventor: VRANCEANU, Marcel, 67056 Ludwigshafen am Rhein (DE); NIEDERLE, Astrid Elisa, 67056 Ludwigshafen am Rhein (DE); GEOERG, Daniel, 67056 Ludwigshafen am Rhein (DE); HOLTZE, Christian, 67056 Ludwigshafen am Rhein (DE); STAEHLE, Philipp, 67056 Ludwigshafen am Rhein (DE)
(74) Representative: BASF IP Association
(86) International application number: PCT/EP2021/063867
(87) International publication number: WO 2021/239716

(56) References cited:
- WO-A1-2018/035718
- WO-A1-2020/089922
- T.-A. MEIER ET AL: "On-chip monitoring of chemical syntheses in microdroplets via surface-enhanced Raman spectroscopy", CHEMICAL COMMUNICATIONS, vol. 51, no. 41, 1 January 2015 (2015-01-01), pages 8588 - 8591, XP055589614, ISSN: 1359-7345, DOI: 10.1039/C4CC09595B

## Description

### Technical Field

The invention relates to a computer-implemented method for determining a target parameter set for a flow chemistry setup for flow chemistry in slugs, a computer program, a computer-readable storage medium and an automated controlling system. The invention specifically may be used for chemical manufacturing and industrial production of chemical products.

### Background art

Methods and devices for flow chemistry, also known as continuous flow chemistry, are generally known. Generally, the flow chemistry comprises a chemical reaction run in a continuous flow stream. Reactants are combined by pumping fluids, including solutions of reagents, through tubes at known rates. The relative proportions of the reactants are controlled by their concentrations and relative flow rates, see https://www.nature.com/subjects/flow-chemistry.

Research and developing processes comprise performing experiments and data analysis, which involves a lot of manual work. Specifically, a chemist formulates the research question and plans experiments, a lab technician conducts the experiment in the lab and the chemist or a data scientist studies the experimental data and decides which additional experiments are necessary. Especially in the first part of a research project, where the focus lies on the screening of the parameter space, this process may be accelerated by using machine learning models for flow chemistry. Machine learning methods for continuous flow chemistry are known from e.g. Artur M. Schweidtmann et al. "Machine learning meets continuous flow chemistry: Automated optimization towards the Pareto front of multiple objectives", Chemical Engineering Journal, Volume 352, 15.11.2018, pages 277-282, E. Bradford et al. "Efficient multi objective optimisation employing Gaussian processes, spectral sampling and a genetic algorithm", J. Global Optim. 71 (2018) 407-438 DOI: 10.1007/s10898-018-0609-2, D. Helmdach et al. "A multi-objective optimisation including results of life cycle assessment in developing bio-renewable-based processes", ChemSusChem 10:18 (2017) 3632-3643. DOI: 10.1002/cssc.201700927, C. Houben et al. "Closed-loop multi-target optimisation for discovery of new emulsion polymerisation recipes", Org. Process Res. Dev., 19 (2015) 1049-1053, C. Houben et al. "Automatic discovery and optimization of chemical processes", Curr. Opinion Chem. Engngn. 9 (2015) 1-7, N. Peremezhney et al. "Combining Gaussian processes, mutual information and a genetic algorithm for multi-targeted optimisation of expensive-to-evaluate functions", Engineering Optimisation, 46 (2014) 1593-1607, N. Peremezhney et al. "Application of dimensionality reduction to visualisation of high-throughput data and building of a classification model in formulated consumer product design", Chem. Res. Proc. Des. 90 (2012) 2179-2185. However, despite the achievements of these documents, controlling of production processes and experiments using continuous flow systems still is challenging.

Moreover, methods and devices for flow chemistry in slugs are generally known. For flow chemistry in slugs, usually two liquids are introduced into a tubular reactor at the same time or a dispersed phase may be introduced into a continuous phase which flows within the tubular reactor, and form slugs. Thus, in contrast to continuous flow chemistry, flow chemistry in slugs is non-continuous. Flow chemistry in slugs may prevents clogging of the channels because there is no direct contact between the reaction media and the channel walls. This enables the use of flow chemistry for the reactions with solid formation and fouling. Moreover, a constant and very precise reaction time due to the fact that the slugs, which can be seen as small batch reactors, are transported through the tubular reactor one after each other. In this way there is no typical laminar flow of the reaction media in small channels, in the middle faster as on the side, which would have produced a broader reaction time distribution of the reactants. The reaction volume in the flowing slugs may be permanently mixed due to the internal vortexes being produced due to the friction of the slug with the channel wall. Using fast inline analytics as UV-VIS spectroscopy, it may be possible to apply statistics on the results of each individual slugs. In this way relevant or irrelevant measurement data could be quickly identified. For slow analytics as Raman spectroscopy, many slugs will be measured in a certain time and the individual measurements may then be cumulated. Flow chemistry in slugs is described, for example, in KF. Jensen, "Flow Chemistry-Microreaction Technology Comes of Age", AlChE, 2017 Vol. 63, No. 3, BJ. Reizman, K.F. Jensen. "Simultaneous solvent screening and reaction optimization in microliter slugs", Chem Commun. 2015;51(68):13290-13293, M. Movsisyana et al. "Flow Synthesis of Heterocycles", Advances in Heterocyclic Chemistry, Volume 119, 2016, Elsevier Inc., ISSN 0065-2725, Pages 25- 55, L. Shang et al. "Emerging Droplet Microfluidics", Chem.Rev. 2017, 117, 7964-8040, Anne-Kathrin Liedtke, "Study of a new gas-liquid-solid three phase contact mode at millimetric scale: catalytic reactors using "slurry Taylor"", Chemical and Process Engineering. Universite Claude Bernard - Lyon I, 2014, D. Belder et al., "On-chip monitoring of chemical syntheses in microdroplets via SERS", Chem. Commun., 2015, 51, 8588. However, automatization of research and developing processes for flow chemistry in slugs is not possible until now, and instead involves manual work.

WO 2018/035718 A1 describes direct measurement and simulation of real-time production rates of chemical products in complex chemical plants. A predictive model developed based on machine learning algorithms using historical sensor data and production data provides accurate real-time prediction of production rates of chemical products in chemical plants. An optimization model based on machine learning algorithms using clustered historical sensor data and production data is described.

WO 2020/089922 A1 describes a method of automated control of an industrial reactor-based production process comprising the steps of: a) collecting data associated with performance of a production process of a reactor; b) defining a set of monitored parameters and a set of controlled parameters in the production process; c) defining a model comprising a set of equations mimicking a dynamic behavior of the process of a reactor, wherein in the model, changes in the monitored parameters are linked to changes in the controlled parameters; and d) creating a trained agent obtained by iterative machine learning training code and using the model, wherein the trained agent is capable of making decisions regarding controlled parameters to be applied to the reactor based on monitored parameters of the production process.

### Problem to be solved

It is therefore desirable to provide methods and devices which address the above-mentioned technical challenges. Specifically, devices and methods for determining a target parameter set for a flow chemistry setup for flow chemistry in slugs shall be provided which allow automatization and optimization and thus, less complex, robust and improved controlling of processes involving flow chemistry in slugs.

### Summary

This problem is addressed by a computer-implemented method for controlling and/or monitoring a production plant, a computer program and a controlling system with the features of the independent claims. Advantageous embodiments are listed in the dependent claims.

In a first aspect of the present invention, a computer implemented method for determining at least one target parameter set for a flow chemistry setup for flow chemistry in slugs is proposed.

The term "computer-implemented" as used herein is a broad term and is to be given its ordinary and customary meaning to a person of ordinary skill in the art and is not to be limited to a special or customized meaning. The term specifically may refer, without limitation, to a process which is fully or partially implemented by using a data processing means, such as data processing means comprising at least one processor. The term "computer", thus, may generally refer to a device or to a combination or network of devices having at least one data processing means such as at least one processor. The computer, additionally, may comprise one or more further components, such as at least one of a data storage device, an electronic interface or a human-machine interface.

The term "slugs" as used herein is a broad term and is to be given its ordinary and customary meaning to a person of ordinary skill in the art and is not to be limited to a special or customized meaning. The term specifically may refer, without limitation, to a segmented liquid-liquid flow pattern. Slugs may be formed by introducing at least two liquids into a tubular reactor at the same time or by introducing a dispersed phase into a continuous phase which flows within the tubular reactor, also denoted reaction-phase and carrier liquid. For introducing the two liquids Y-mixers and/or T-mixers may be used. Formation of slugs is generally known to the skilled person. Slugs can be seen as small batch reactors which are transported through a tubular reactor one after each other. Slugs may exhibit well-defined interphase mass transfer areas and flow patterns. Two basic mass transfer mechanisms may arise: convection within the individual liquid slugs and diffusion between adjacent slugs, see J. Jovanovic et al "Liquid-liquid slug flow: Hydrodynamics and pressure drop", Chemical Engineering Science 66(1):42-54, January 2011, DOI: 10.1016/j.ces.2010.09.040. The term "flow chemistry in slugs" as used herein is a broad term and is to be given its ordinary and customary meaning to a person of ordinary skill in the art and is not to be limited to a special or customized meaning. The term specifically may refer, without limitation, to segmented, and in particular, non-continuous flow chemistry, with a liquid-liquid flow pattern comprising a plurality of slugs.

The method according to the invention proposes using slug flow as a means of providing true slug or plug flow behavior with the advantages of: a narrow residence time distribution, large numbers of independent experiments in a short time, the potential of doing statistics over the analytical results of multiple individual slugs, handling of solid particles to some extent without blockage of the flow channel and gentle mixing of an internal volume.

The term "flow chemistry setup" as used herein is a broad term and is to be given its ordinary and customary meaning to a person of ordinary skill in the art and is not to be limited to a special or customized meaning. The term specifically may refer, without limitation, to a system configured for performing at least one flow chemistry process, in particular for at least one flow chemistry process involving slugs. The flow chemistry setup may comprise a plurality of components. For example, the flow chemistry setup may comprise one or more of at least one reactor, at least one pump, at least one mixer such as a Y-mixer or a T-mixer, at least one valve, at least one heating device, at least one pressure regulator, at least one analytics unit.

The term "parameter set" for the flow chemistry setup, as used herein, is a broad term and is to be given its ordinary and customary meaning to a person of ordinary skill in the art and is not to be limited to a special or customized meaning. The term specifically may refer, without limitation, to settable and/or configurable and/or adjustable characteristics and/or properties of the flow chemistry setup. The parameter set may comprise a plurality of parameters. The parameter set may comprise parameters relating to recipe for the reaction and/or process parameters, in particular control parameters. The parameters of the parameter set of the flow chemistry setup may define characteristics and/or properties of the components of the flow chemistry setup. The parameter set of the flow chemistry setup may influence one or more of reaction time, reaction rate, slug formation and a final reaction product.

The term "target parameter set" as used herein is a broad term and is to be given its ordinary and customary meaning to a person of ordinary skill in the art and is not to be limited to a special or customized meaning. The term specifically may refer, without limitation, to an optimized parameter set for the flow chemistry set up. The target parameter set may comprise at least one parameter selected from the group consisting of: flow rate of at least one pump, e.g. flow rates for each pump of the flow chemistry setup or a total flow rate; temperature; reaction time; at least one parameter from online analytics of an educt, e.g. pH value; an amount of seed particles, e.g. for the case of precipitations to control nucleation processes. The reaction time can be adjusted by changing the total flow rate. The target parameter set may comprise at least one parameter relating to a reactor size. Preferably, however, the size of the reactor may be kept constant and/or unchanged. The target parameter set may comprise a parameter relating to the size of the slugs. The size of the slugs can be adjusted by changing a ratio between a reaction-phase and a carrier liquid. Preferably, however, the size of the slugs may be kept constant such that every slug has identical conditions.

The method is a self-learning method. The term "self-learning method", as used herein, is a broad term and is to be given its ordinary and customary meaning to a person of ordinary skill in the art and is not to be limited to a special or customized meaning. The term specifically may refer, without limitation, to ability to learn with repetition of the method and, in particular, to improve over time in the sense of providing an as far as possible proper or suitable target parameter set for an optimization target. The method may be configured to learn with every repetition. However, embodiments are possible, wherein the method learns after a pre-defined number of repetitions. For example, a plurality of experiments may be executed, wherein after running of the experiments the method is trained. The method may comprise using at least one artificial intelligence (Al-) system. The method may comprise using at least one machine-learning tool, in particular a deep learning architecture. The method may be performed completely automatic. The complete automatization of the method may allow the Al-system to find the optimal parameters on its own. Specifically, the method may be self-optimizing by setting its parameters iteratively to fulfill a pre-defined final goal without human interaction. To this end, a machine learning model is used. Based on observations the machine learning model facilitates the configuration of the parameters.

As outlined above, flow chemistry in slugs is generally known and described, for example, in KF. Jensen, "Flow Chemistry-Microreaction Technology Comes of Age", AlChE, 2017 Vol. 63, No. 3, BJ. Reizman, K.F. Jensen. "Simultaneous solvent screening and reaction optimization in microliter slugs", Chem Commun. 2015;51(68):13290-13293, M. Movsisyana et al. "Flow Synthesis of Heterocycles", Advances in Heterocyclic Chemistry, Volume 119, 2016, Elsevier Inc., ISSN 0065-2725, Pages 25- 55, L. Shang et al. "Emerging Droplet Microfluidics", Chem.Rev. 2017, 117, 7964-8040, Anne-Kathrin Liedtke, "Study of a new gas-liquid-solid three phase contact mode at millimetric scale: catalytic reactors using "slurry Taylor"", Chemical and Process Engineering. Universite Claude Bernard - Lyon I, 2014, D. Belder et al., "On-chip monitoring of chemical syntheses in microdroplets via SERS", Chem. Commun., 2015, 51, 8588. The known setups are usually automized such that pumps and other components can be controlled via a computer. However, these known setups are not configured for self-learning from data and for prosing new experiments.

The method comprises the following method steps which, specifically, may be performed in the given order. Still, a different order is also possible. It is further possible to perform two or more of the method steps fully or partially simultaneously. Further, one or more or even all of the method steps may be performed once or may be performed repeatedly, such as repeated once or several times. Further, the method may comprise additional method steps which are not listed.

The method according to the claimed invention comprises the following steps:
a) determining at least one process variable by using at least one sensor of the flow chemistry setup, wherein the process variable is determined by measuring of one or more quantities of slugs flowing through at least one tubular reactor;
b) training of at least one machine-learning model based on the process variable;
c) determining the target parameter set by applying an optimizing algorithm in terms of at least one optimization target on the trained machine-learning model;
d) providing the determined target parameter set and/or considering the determined target parameter set for evaluating a flow chemistry setup and/or for evaluating at least one flow chemistry product.

The term "process variable", as used herein, is a broad term and is to be given its ordinary and customary meaning to a person of ordinary skill in the art and is not to be limited to a special or customized meaning. The term specifically may refer, without limitation, to at least one quantity specifying the final reaction product. As used herein, the term "final reaction product", also denoted produced fluid and flow chemistry product, may refer to an outcome or output of the flow chemistry process, in particular to an outcome or output of the tubular reactor. The tubular reactor may comprise at least one outlet. The process variable may be determined at the outlet of the tubular reactor. The process variable may be determined by measuring of one or more quantities of slugs flowing through the tubular reactor. The process variable may comprise at least one spectral information; at least one intensity information; at least one brightness information; at least one turbidity information, at least one colorfulness information.

The term "determining at least one process variable", as used herein, is a broad term and is to be given its ordinary and customary meaning to a person of ordinary skill in the art and is not to be limited to a special or customized meaning. The term specifically may refer, without limitation, to at least one process of generating at least one measurement value, in particular at least one representative result or a plurality of representative results indicating the process variable. Step a) may comprise one measurement of the process variable or multiple successive measurements of one or more quantities. The flow chemistry setup comprises at least one sensor, specifically a plurality of sensors. The term "sensor", as used herein, is a broad term and is to be given its ordinary and customary meaning to a person of ordinary skill in the art and is not to be limited to a special or customized meaning. The term specifically may refer, without limitation, to an arbitrary element which is adapted to perform the above-mentioned process of determining of the process variable and/or which is adapted to be used in the above-mentioned process of determining of the process variable. Thus, the sensor specifically may be adapted to determine the process variable.

The process variable may be determined using "inline", "online" or "atline" analytic. For inline analytics, a measurement of the process variable may be determined within the reactor. Inline analytics may have the advantages that no sample preparation is required, no distortion occurs due to sample extraction, it is possible to maintain pressure and/or temperature, to measure in real time and to obtain spatially resolved measurements. For continuous online analytics, a measurement of the process variable may be determined using a bypass. Continuous online analytics may have the advantages that no sample preparation is required, no distortion occurs due to sample extraction, it is possible to maintain pressure and/or temperature and to measure in real time. For non-continuous online analytics, a measurement of the process variable may be determined after automatized sample extraction. Non-continuous online analytics may have the advantage that it is possible to measure very close to the process and only with short time delay. For atline analytics, also denoted offline analytics, a measurement of the process variable may be determined after manual sample extraction. This may require sample preparation but may allow short waiting periods.

The determining of the process variable may comprise one or more of: ultraviolet and visible spectroscopy (UV-VIS) spectroscopy, fluorescence spectroscopy, Raman spectroscopy, infrared (IR) spectroscopy, attenuated total reflection (ATR) infrared (IR) spectroscopy, nuclear magnetic resonance (NMR) spectroscopy, optical detection, fluorescence spectroscopy, mass spectrometry (MS), high performance liquid chromatography (HPLC), gas chromatography (GC); conductometry and pH-determination, calorimetry, viscosity determination, powder X-ray diffraction (PXRD), and automated titration. For example, the process variable may be determined by using UV-VIS spectroscopy and the process variable may be one or more of intensity, wavelength, peak area, half width at half maximum. For example, the process variable may be determined by using fluorescence spectroscopy and the process variable may be intensity or wavelength. For example, the process variable may be determined by using Raman spectroscopy and the process variable may be intensity. For example, the process variable may be determined by using infrared spectroscopy and the process variable may be intensity. For example, the process variable may be determined by using light scattering and the process variable may be intensity. For example, the process variable may be determined by using optical detection and the process variable may be particle in flow. For example, the process variable may be determined by using conductometry and pH-determination. For example, the process variable may be determined using calorimetry and the process variable may be heat flux. For example, the process variable may be determined by viscosity determination and the process variable may be pressure difference. For example, the process variable may be determined by using HPLC and the process variable may be a peak area. For example, the process variable may be determined by using GC and the process variable may be a peak area.

The sensor may comprise one or more of at least one spectrometer, at least one light barrier, at least one chromatograph, a viscometer, at least one titration device, at least one calorimeter. For example, the sensor may be or may comprise at least one light barrier. The light barrier may be configured for determining at the outlet of the tubular reactor how much light passes through the final reaction product. Specifically, the sensor may be configured for determining intensity of or change of intensity of at least one light beam having passed the final reaction product.

Selection of an appropriate separation media may take into account specifics of the selected analytical method. For example, in case of using UV-Vis and scattering light, air or gases or fluorinated oils may be used. Reaction and separation media may differ in their UV-Vis signal for a specific wavelength or wavelength range so that a differentiation is possible. Scattering at interfaces can be used as a trigger for detection of slugs. For example, in case of using NMR fluorocarbon oil, possibly with a specific NMR-tracer may be used. The NMR fluorocarbon oil may be immiscible with hydrophilic and lipophilic components. Specifically, F-substituents do not show activity in proton NMR. For example, H-C-F has a fairly characteristic chemical shift in the range of 4 - 4.5. For example, in case of using IR spectroscopy air or N2 gases may be used. These materials have no significant signal with wavenumbers in the range of typical C=O vibrational modes and decrease of signal to almost 0 can be used as a trigger. For example, in case of using ATR IR fluorocarbon oil may be used which is immiscible with hydrophilic and lipophilic components and the reaction media should wet the ATR crystal and the separation media should not. For example, in case of using Raman spectroscopy fluorocarbon oil, air or gases, or other liquids may be used. The Raman signal of the separation media should not cover the Raman signal of the reactor media to be analyzed. For example, in case of using HPLC using an autosampler (at-line HPLC) air or gases may be used. The air or gases do separate in the HPLC vials and the measurement can be performed as usual. For example, in case of using HPLC using a gas/liquid or liquid/liquid separator, air or gases or fluorinated oil may be used. The separation media is separated on the flow and just the content of the slug is injected in the HPLC. For this the content of few slugs is measured together. A trigger like described with respect to UV-VIS can detect a slug and if the HPLC is ready to measure a next sample, automatic valves can send the slug in the HPLC sample loop and stop the flow once the loop is full. For this the slug size should be much larger than the volume of the sample loop. In case of using mass spectrometry air may be used. This may allow to prevent convolution of signal with fragments of interest and decrease of signal to almost 0 can be used as a trigger.

The separation media between the slugs may be selected such that it is compatible with the analytical setup. For example, scattering and interfaces can disturb UV-Vis measurements. The method may comprise cutting out the scattering signals by algorithms. For example, oils can ruin chromatographic columns. The method may comprise using gas bubbles for separation and/or possibly control valves to direct the correct (fractions of the) slugs to an autosampler sample loop. For example, interference with the desired mass-spectrum and NMR-signals may occur. The method may comprise using fluorinated solvents or gas bubbles for separation. For example, for ATR-IR it may be required to take care of the right wettability. When a gaseous media is used for separation, the reaction media is in contact with the channel/tube wall which can led to depositions and broadening of the residence time distribution.

The separation media may be selected such that it is compatible with wetted materials from the system (and vice versa), to ensure a stable separation and to avoid coalescence.

The separation media may be selected such that it yields detectable signals in the analytical method of choice. In this way, the method may comprise using algorithms which are capable of automatically distinguishing the signals of interest from the slug, in which the reaction happens, from those signals of the separation media or the interfaces. Elaboration of data with appropriate algorithms may comprise two steps:
- Use the signal of the separation media in the analytical detection to cut out the data of interest in the series of time-resolved measurements and make them available for further analysis;
- Carry out the machine-learning based on these data to e. g. determine the next set of parameters in the screening, and realize a self-optimizing screening.

It was found that one has to distinguish between very fast methods like UV-VIS and a slow method like HPLC. For the slow methods it may be possible to accumulate many slugs and wait for HPLC to be ready to measure the next sample. For a fast method each slug can be a separate experiment.

The term "reactor", as used herein, is a broad term and is to be given its ordinary and customary meaning to a person of ordinary skill in the art and is not to be limited to a special or customized meaning. The term specifically may refer, without limitation, to an arbitrary device in which a chemical reaction takes place. The term "tubular reactor", as used herein, is a broad term and is to be given its ordinary and customary meaning to a person of ordinary skill in the art and is not to be limited to a special or customized meaning. The term specifically may refer, without limitation, to geometric dimensions, in particular shape, of the reactor having the form of or consisting of a tube. The tube may comprise a cylindrical surface. The tube may have a length h and having a diameter d.

The sensor may be configured for generating at least one sensor signal. The term "sensor signal", also denoted measurement signal, as used herein, is a broad term and is to be given its ordinary and customary meaning to a person of ordinary skill in the art and is not to be limited to a special or customized meaning. The term specifically may refer, without limitation, to a signal generated by the sensor in response to a detect event or changes in its environment, in particular in response to illumination. Specifically, the sensor signal may be or may comprise at least one electrical signal, such as at least one analogue electrical signal and/or at least one digital electrical signal. More specifically, the sensor signal may be or may comprise at least one voltage signal and/or at least one current signal. Further, either raw sensor signals may be used, or the sensor may be adapted to process or preprocess the sensor signal, thereby generating secondary sensor signals, which may also be used as sensor signals, such as preprocessing by filtering or the like. For example, the preprocessing may comprise considering statistics over several slugs.

The flow chemistry setup can assess if the flow chemistry setup produces valid data. If the data is not valid the system will repeat the measurement, in particular the experiment, automatically. For example, the method may comprise at least one validation step. The validation step may comprise validating at least one measurement value of the determined process variable. The term "validation", as used herein, is a broad term and is to be given its ordinary and customary meaning to a person of ordinary skill in the art and is not to be limited to a special or customized meaning. The term specifically may refer, without limitation, to a process of determining suitability of the measurement of the process variable, in particular in view of accuracy and reliability. The validation may comprise comparing the measurement value with at least one predefined criterion. The predefined criterion may be an accuracy criterion such as tolerable measurement error. Step a) may be repeated in case the measurement value of the determined process variable is not validated. If the measurement value is validated the measurement value may be considered as valid data point. If the measurement value is validated the method may proceed with step b).

Additionally or alternatively, the method may comprise at least one anomaly detection step. The term "anomaly", as used herein, is a broad term and is to be given its ordinary and customary meaning to a person of ordinary skill in the art and is not to be limited to a special or customized meaning. The term specifically may refer, without limitation, to a deviation from an expected sensor signal, in particular outside at least one tolerance interval. At least one algorithm may monitor the measurement signal of the sensor. The algorithm may be configured for determining at least one anomaly. The algorithm may be based on artificial intelligence. The algorithm may comprise at least one machine-learning algorithm. The machine-learning algorithm may be trained using historic sensor signals, wherein the sensor signals may comprise sensor signals having no anomaly and sensor signals having an anomaly. Step a) may be repeated in case an anomaly is detected. If no anomaly is detected the measurement is considered as valid data point. If no anomaly is detected the method may proceed with step b).

The validation and/or anomaly detection step may be configured for extracting clean and high-quality analytical data. Specifically, the method according to the invention proposes smart use of internal triggers to be detected by the analytical tool employed in the screening to extract clean and high-quality analytical data. This may allow dedicated algorithms to identify the analytical data of interest from the slug and eliminate those signals stemming from the separation media. In order to achieve this, the algorithm may analyze the sequence of data along the time axis and cut out the neat signals from the slugs. Using internal triggers has the advantage of not needing additional analytical instrumentation (the analytical method itself determines when the slug and plug begins and ends, respectively), and not needing intricate synchronization between different measurement devices (one for detection, another one for the analysis). This is particularly helpful, if flow rates are changed to screen the influence of residence time. Detecting and the separation of the slugs/plugs may avoid their interference with the screening by generating noise, reducing the integral signal strength, harming the column.

The term "machine-learning" as used herein is a broad term and is to be given its ordinary and customary meaning to a person of ordinary skill in the art and is not to be limited to a special or customized meaning. The term specifically may refer, without limitation, to a method of using artificial intelligence (AI) for automatically model building of machine-learning models, in particular of prediction models. The training may be performed using at least one machine-learning system. The term "machine-learning system" as used herein is a broad term and is to be given its ordinary and customary meaning to a person of ordinary skill in the art and is not to be limited to a special or customized meaning. The term specifically may refer, without limitation, to a system or unit comprising at least one processing unit such as a processor, microprocessor, or computer system configured for machine learning, in particular for executing a logic in a given algorithm. The machine-learning system may be configured for performing and/or executing at least one machine-learning algorithm, wherein the machine-learning algorithm is configured for building the at least one machine-learning model. The machine-learning model may comprise at least one machine-learning architecture and model parameters. The machine-learning model may be a Bayesian machine-learning model and/or may be based on neural networks such as a reinforcement neural network. The machine-learning model may comprise at least one design of experiments method. The machine-learning model may be configured for considering noise of the determined process variable. The noise can underlie different distributions, e.g., Gaussian, and types, e.g., additive and/or multiplicative. This can be handled accordingly by the machine-learning model. The machine-learning model may be configured for considering constraints for the target parameter set. Parameters of the target parameter set can have constraints, e.g., upper and/or lower bounds or constant sum of flow rates of the pumps which might be considered by the machine-learning model.

The term "training", also denoted learning, as used herein, is a broad term and is to be given its ordinary and customary meaning to a person of ordinary skill in the art and is not to be limited to a special or customized meaning. The term specifically may refer, without limitation, to a process of building the machine-learning model, in particular determining and/or updating parameters of the machine-learning model. The machine-learning model may be at least partially data-driven. The machine-learning model may learn from the valid data points. The training may be performed on sensor data, such as considering the determined process variable. The training may be performed on process parameters determined in historical production runs, in particular historical production runs, having a known parameter set for the flow chemistry setup. As used herein, the term "at least partially data-driven model" is a broad term and is to be given its ordinary and customary meaning to a person of ordinary skill in the art and is not to be limited to a special or customized meaning. The term specifically may refer, without limitation, to the fact that the machine-learning model comprises data-driven model parts and other model parts based on physico-chemical laws.

The determining of the target parameter set in step c) may comprise at least one optimization step. The term "optimization", as used herein, is a broad term and is to be given its ordinary and customary meaning to a person of ordinary skill in the art and is not to be limited to a special or customized meaning. The term specifically may refer, without limitation, to the process of selecting of a best parameter set with regard to the optimization target from a parameter space of possible parameters. The term "optimization target", as used herein, is a broad term and is to be given its ordinary and customary meaning to a person of ordinary skill in the art and is not to be limited to a special or customized meaning. The term specifically may refer, without limitation, to at least one criterion under which the optimization is performed. The optimization target may comprise at least one optimization goal and accuracy and/or precision. The optimization target may be pre-specified such as by at least one user of the flow chemistry setup. The optimization target may be at least one user's specification. The user may select the optimization goal and a desired accuracy and/or precision. For example, the optimization target may comprise at least one value of sensor data. A corresponding concentration of the produced fluid can be determined from the sensor data. The optimization goal may be a measurement value determined with the sensor, such as an intensity value determined with the light barrier, with a desired accuracy and/or precision.

The optimization may comprise application of the machine-learning model. Based on the current state of the machine learning model and/or based on the determined process variable, the optimization algorithm can decide how to set best the parameters of the flow chemistry setup. As used herein, the term "optimization algorithm" may refer to at least one algorithm for solving at least one optimization problem. The optimization may comprise solving at least one optimization problem such as at least one maximization problem or at least one minimization problem. The optimization may comprise a computational step such as computing the solution of the optimization problem. The optimization algorithm may be a Bayesian optimization, for example with a Gaussian process as surrogate model. Other optimization algorithms may be possible, too. For example, the optimization algorithm may be a reinforcement learning network. The optimization algorithm may be configured for considering noise of the determined process variable. The noise can underlie different distributions, e.g. Gaussian, and types, e.g. additive and/or multiplicative. This can be handled accordingly in step b) and/or in step c). The optimization algorithm may be configured for considering constraints for the target parameter set. Parameters of the target parameter set can have constraints, e.g., upper and/or lower bounds or constant sum of flow rates of the pumps which might be considered by the optimization algorithm.

The optimization step may be dependent on the machine-learning model. However, this may not imply that every decision in every step must depend on the machine-learning model. For example, a plurality of experiments may be executed, wherein after running of the experiments the method is trained. For example, an average window from previous values of parameters can be used in addition. Moreover, the optimization step may comprise a trade-off between exploitation and exploration of the underlying space.

In step c) the optimization algorithm can determine one target parameter set or multiple target parameter sets such as a Pareto-front or a subset of a Pareto-front. In case of multiple target parameter sets step d), and in particular repeating one or more of method steps a) to d), may be executed for all configurations of target parameter sets.

Usually research projects begin with a screening task. In this stadium, the research question is clearly described which means that the optimization target is defined and a list of influencing parameters is defined. Usually the parameter space is large, which means that a lot of experiments would need to be performed. The method according to the present invention can handle this screening task automatically with a small consumption of ingredients and manual work. Specifically, as will be outlined in detail below, instructions to execute the method according to the present invention may be implemented as computer program, in particular software, such that when the program is executed by a computer or computer network, the instructions cause the computer or computer network to carry out the method according to the present invention. The flow chemistry setup may be completely automatized, in a way that all relevant parameters, in particular recipe and process parameters, may be controlled by the method according to the present invention in a given range. The machine-learning model may learn from the valid experimental data points and the optimization step may plan parameters for new experiments, which are necessary to achieve a given optimization target.

The method according to the invention proposes using machine learning and/or artificial intelligence in combination with a process-controlled setup for realizing self-optimizing screenings with the advantage of performing experiments in high throughput, automatically recording the analytical data to avoid human errors and reduce repetitive manual work, swiftly screening those domains of the parameter space that contain valuable information by dynamically setting the parameters according to tailored machine learning algorithms.

Step d) comprises providing the determined target parameter set and/or considering the determined target parameter set for evaluating a flow chemistry setup and/or for evaluating at least one flow chemistry product.

The term "providing the target parameter set" as used herein is a broad term and is to be given its ordinary and customary meaning to a person of ordinary skill in the art and is not to be limited to a special or customized meaning. The term specifically may refer, without limitation, to presenting and/or displaying and/or communicating the target parameter set, e.g. to a user. The providing of the determined target parameter set may be performed using at least one output device. The term "output device" as used herein is a broad term and is to be given its ordinary and customary meaning to a person of ordinary skill in the art and is not to be limited to a special or customized meaning. The term specifically may refer, without limitation, to at least one interface configured for providing the target parameter set, e.g. to at least one user. The output device may comprise at least one display device.

The term "considering the target parameter set for evaluating a flow chemistry setup" as used herein is a broad term and is to be given its ordinary and customary meaning to a person of ordinary skill in the art and is not to be limited to a special or customized meaning. The term specifically may refer, without limitation, to setting of parameters of the flow chemistry setup in accordance with the determined target parameter set. The term "considering the determined target parameter set for evaluating at least one flow chemistry product" as used herein is a broad term and is to be given its ordinary and customary meaning to a person of ordinary skill in the art and is not to be limited to a special or customized meaning. The term specifically may refer, without limitation, to adapting and/or adjusting recipe, in particular ingredients and/or concentration of ingredients, of a product to be produced with the flow chemistry setup.

As outlined above, one or more or even all of the method steps may be performed repeatedly, such as repeated once or several times. This may allow for self-learning and/or self-optimizing. Specifically, the determined target parameter set may be used as starting point for a next optimization. As used herein, the term "next optimization" may refer to repeating method steps a) to d), wherein in step a) the process variable is determined for a flow chemistry setup having parameters set to the target parameters determined in the previous round of the method. Steps a) to d) may be repeated until the process variable measured by the sensor fits to the previously defined target value within a pre-defined accuracy.

The present invention may allow to speed up of research process, especially for screening purpose. Fast development of new materials may be possible. Users can concentrate on other tasks involving manual action. Flow chemistry in slugs may allow for a resource efficient research. For each experiment only a small amount of ingredients may be necessary. Using slugs may allow for simplifying optimization, in particular in view of less noise in input data used for the algorithms in steps b) and c). The slugs may provide clear limits for a measurement. No residues may be present within the slugs resulting in enhanced input data for the algorithms in steps b) and c). Thus, in comparison of continuous flow chemistry enhanced results can be achieved.

In known methods and devices slugs are generally not used because usage of slugs may result in increasing effort. Slugs disturb analytics such as scattered light signal from UV-VIS. Suitable materials need to be selected in order to prevent contamination of detectors. Algorithms for slug detection are required and extraction of clean and high quality data is necessary. Moreover, statistics over several single measurements of slugs are required. The present invention describes a method that may be capable of generating high quality data by combining the following aspects:
- The use of slug flow as a means of providing true slug or plug flow behavior with the advantages of: a narrow residence time distribution, large numbers of independent experiments in a short time, the potential of doing statistics over the analytical results of multiple individual slugs, handling of solid particles to some extent without blockage of the flow channel and gentle mixing of an internal volume.
- The use of machine learning and/or artificial intelligence in combination with a process-controlled setup for realizing self-optimizing screenings with the advantage of: performing experiments in high throughput, automatically recording the analytical data to avoid human errors and reduce repetitive manual work, swiftly screening those domains of the parameter space that contain valuable information by dynamically setting the parameters according to tailored machine learning algorithms.
- Smart use of internal triggers to be detected by the analytical tool employed in the screening to extract clean and high-quality analytical data. This may allow dedicated algorithms to identify the analytical data of interest from the slug and eliminate those signals stemming from the separation media. In order to achieve this, the algorithm may analyze the sequence of data along the time axis and cut out the neat signals from the slugs. Using internal triggers has the advantage of not needing additional analytical instrumentation (the analytical method itself determines when the slug and plug begins and ends, respectively), and not needing intricate synchronization between different measurement devices (one for detection, another one for the analysis). This is particularly helpful, if flow rates are changed to screen the influence of residence time. Detecting and the separation of the slugs/plugs may avoid their interference with the screening by generating noise, reducing the integral signal strength, harming the column.
- The selection of appropriate separation media may take into account specifics of the analytical method.

In a further aspect of the invention, a computer program for determining at least one target parameter set for a flow chemistry setup for flow chemistry in slugs is proposed. The computer program comprises instructions which, when the program is executed by a computer or a computer network, cause the computer or the computer network to fully or partially perform the method according to the present invention in one or more of the embodiments enclosed herein. The computer program is configured to perform at least steps a) to d) of the method according to the present invention. For possible definitions of most of the terms used herein, reference may be made to the description of the computer implemented method above or as described in further detail below.

Specifically, the computer program may be stored on a computer-readable data carrier and/or on a computer-readable storage medium. As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM). For example, the computer program and/or the machine learning-model and/or training data may be stored using at least one database such as of a server or a cloud server. For example, computer program and/or the machine learning-model and/or training data may be stored by a Laboratory information management system.

Further disclosed and proposed herein is a computer program product having program code means, in order to perform the method according to the present invention in one or more of the embodiments enclosed herein when the program is executed on a computer or computer network. Specifically, the program code means may be stored on a computer-readable data carrier and/or computer-readable storage medium.

Further disclosed and proposed herein is a data carrier having a data structure stored thereon, which, after loading into a computer or computer network, such as into a working memory or main memory of the computer or computer network, may execute the method according to the present invention in one or more of the embodiments disclosed herein.

Further disclosed and proposed herein is a computer program product with program code means stored on a machine-readable carrier, in order to perform the method according to the present invention one or more of the embodiments disclosed herein, when the program is executed on a computer or computer network. As used herein, a computer program product refers to the program as a tradable product. The product may generally exist in an arbitrary format, such as in a paper format, or on a computer-readable data carrier. Specifically, the computer program product may be distributed over a data network.

In a further aspect of the invention, an automated control system for a flow chemistry setup for flow chemistry in slugs is proposed. The automated control system comprises
- at least one communication interface configured for receiving at least one process variable determined by at least one sensor of at least one flow chemistry setup, wherein the process variable is determined by measuring of one or more quantities of slugs flowing through at least one tubular reactor;
- at least one machine-learning model configured for training based on the process variable:
- at least one processing unit configured for determining at least one target parameter set by applying an optimizing algorithm in terms of at least one optimization target on the trained machine-learning model;
- at least one output device configured for providing the determined target parameter set.

The automated control system may be configured for automatically controlling the flow chemistry setup. The automated control system may be configured for performing the method according to the present invention. For possible definitions of most of the terms used herein, reference may be made to the description of the computer implemented method above or as described in further detail below. The control system may be part of the flow chemistry setup or may be embodied separately from the flow chemistry setup

The term "communication interface" as used herein is a broad term and is to be given its ordinary and customary meaning to a person of ordinary skill in the art and is not to be limited to a special or customized meaning. The term specifically may refer, without limitation, to an item or element forming a boundary configured for transferring information. In particular, the communication interface may be configured for transferring information from a computational device, e.g. a computer, such as to send or output information, e.g. onto another device. Additionally or alternatively, the communication interface may be configured for transferring information onto a computational device, e.g. onto a computer, such as to receive information. The communication interface may specifically provide means for transferring or exchanging information. In particular, the communication interface may provide a data transfer connection, e.g. Bluetooth, NFC, inductive coupling or the like. As an example, the communication interface may be or may comprise at least one port comprising one or more of a network or internet port, a USB-port and a disk drive. The communication interface may be at least one web interface.

The term "processing unit" as used herein is a broad term and is to be given its ordinary and customary meaning to a person of ordinary skill in the art and is not to be limited to a special or customized meaning. The term specifically may refer, without limitation, to an arbitrary device adapted to perform the optimization, preferably by using at least one data processing device and, more preferably, by using at least one processor and/or at least one application-specific integrated circuit. Thus, as an example, the processing unit may comprise one or more programmable devices such as one or more computers, application-specific integrated circuits (ASICs), Field Programmable Gate Arrays (FPGAs), or other devices which are configured for performing the optimization. Thus, as an example, the at least one processing unit may comprise at least one data processing device having a software code stored thereon comprising a number of computer commands. The processing unit may provide one or more hardware elements for performing one or more of the named operations and/or may provide one or more processors with software running thereon for performing one or more of the named operations.

The system of flow chemistry setup and control system may be modular such as a kit. The system may have replaceable and exchangeable hardware- and software-components such as with different types of pumps and/or with different optimization algorithms.

As used herein, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically are used only once when introducing the respective feature or element. In most cases, when referring to the respective feature or element, the expressions "at least one" or "one or more" are not be repeated, non-withstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person recognizes, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

Summarizing and without excluding further possible embodiments, the following embodiments may be envisaged:
Embodiment 1: Computer implemented method for determining at least one target parameter set for a flow chemistry setup for flow chemistry in slugs, wherein the method is a self-learning method, the method comprising the following steps:
   a) determining at least one process variable by using at least one sensor of a flow chemistry setup;
   b) training of at least one machine-learning model based on the process variable;
   c) determining the target parameter set by applying an optimizing algorithm in terms of at least one optimization target on the trained machine-learning model;
   d) providing the determined target parameter set and/or considering the determined target parameter set for evaluating a flow chemistry setup and/or for evaluating at least one flow chemistry product.
Embodiment 2: The method according to the preceding embodiment, wherein the determined target parameter set is used as starting point for a next optimization.
Embodiment 3: The method according to any one of the preceding embodiments, wherein steps a) to d) are repeated until the process variable measured by the sensor fits to the previously defined target value within a pre-defined accuracy.
Embodiment 4: The method according to any one of the preceding embodiments, wherein the optimization algorithm is a Bayesian optimization and/or at least one reinforcement learning network.
Embodiment 5: The method according to any one of the preceding embodiments, wherein the machine-learning model is configured for considering noise of the determined process variable.
Embodiment 6: The method according to any one of the preceding embodiments, wherein the machine-learning model is configured for considering constraints for the target parameter set.
Embodiment 7: The method according to any one of the preceding embodiments, wherein the target parameter set comprises at least one parameter selected from the group consisting of: flow rate of at least one pump; temperature; reaction time; at least one parameter from online analytics of an educt; an amount of seed particles.
Embodiment 8: The method according to any one of the preceding embodiments, wherein the process variable is determined by measuring of one or more quantities of slugs flowing through at least one tubular reactor.
Embodiment 9: The method according to any one of the preceding embodiments, wherein the process variable comprises at least one spectral information; at least one intensity information; at least one brightness information; at least one turbidity information, at least one colorfulness information.
Embodiment 10: The method according to any one of the preceding embodiments, wherein the determining of the process variable comprises one or more of: ultraviolet and visible spectroscopy (UV-VIS) spectroscopy, Raman spectroscopy, infrared (IR) spectroscopy, nuclear magnetic resonance (NMR) spectroscopy, optical detection; fluorescence spectroscopy, mass spectrometry (MS), high performance liquid chromatography (HPLC), gas chromatography (GC); conductometry and pH-determination, calorimetry, viscosity determination, powder X-ray diffraction (PXRD), and automated titration.
Embodiment 11: The method according to any one of the preceding embodiments, wherein the sensor comprises one or more of at least one spectrometer, at least one light barrier, at least one chromatograph, a viscometer, at least one titration device, at least one calorimeter.
Embodiment 12: The method according to any one of the preceding embodiments, wherein the method comprises at least one validation step, wherein at least one measurement value of the determined process variable is validated, wherein the validation comprises comparing the measurement value with at least one predefined criterion, wherein step a) is repeated in case the measurement value of the determined process variable is not validated.
Embodiment 13: The method according to any one of the preceding embodiments, wherein the method comprises at least one anomaly detection step, wherein at least one algorithm monitors at least one measurement signal of the sensor, wherein the algorithm is configured for determining at least one anomaly, wherein step a) is repeated in case an anomaly is detected.
Embodiment 14: The method according to any one of the preceding embodiments, wherein the optimization target is at least one user's specification, wherein the optimization target is a concentration of at least one produced fluid.
Embodiment 15: Computer program for determining at least one target parameter set for a flow chemistry setup for flow chemistry in slugs, configured for causing a computer or a computer network to fully or partially perform the method according to any one of the preceding embodiments, when executed on the computer or the computer network, wherein the computer program is configured to perform at least steps a) to d) of the method according to any one of the preceding embodiments.
Embodiment 16: A computer-readable storage medium comprising instructions which, when executed by a computer or computer network, cause to carry out at least steps a) to d) of the method according to any one of the preceding embodiments referring to a method.
Embodiment 17: Automated control system for a flow chemistry setup for flow chemistry in slugs comprising
   - at least one communication interface configured for receiving at least one process variable determined by at least one sensor of at least one flow chemistry setup;
   - at least one machine-learning model configured for training based on the process variable;
   - at least one processing unit configured for determining at least one target parameter set by applying an optimizing algorithm in terms of at least one optimization target on the trained machine-learning model;
   - at least one output device configured for providing the determined target parameter set.
Embodiment 18: The system according to the preceding embodiment, wherein the system is configured for performing the method according to any one of the preceding embodiments referring to a method.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
Figure 1 shows an embodiment of a method according to the present invention; and
Figure 2 shows an embodiment of a flow chemistry setup and automated control system according to the present invention.

### Detailed description of the embodiments

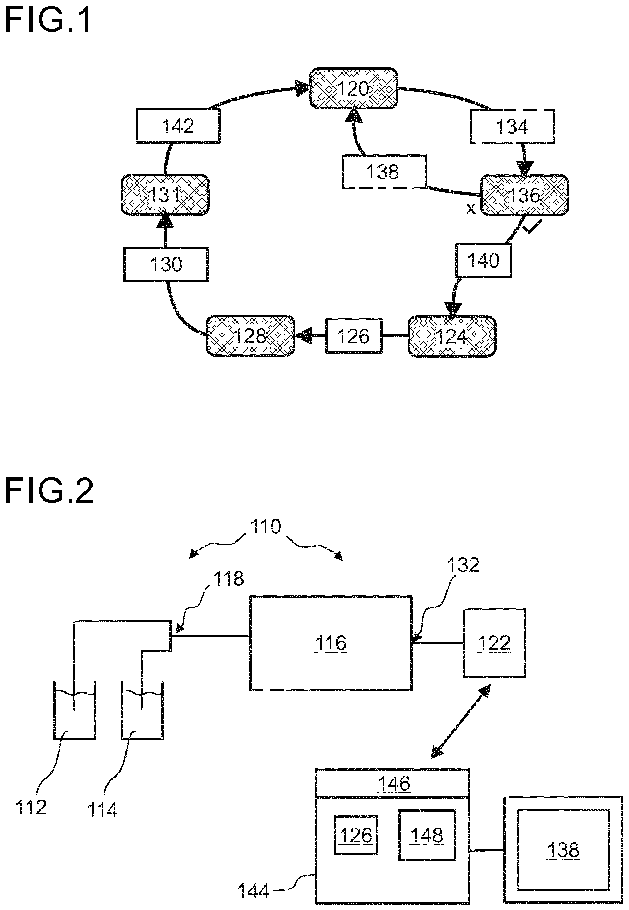

Figure 1 shows an embodiment of a computer-implemented method for determining at least one target parameter set for a flow chemistry setup 110 for flow chemistry in slugs according to the present invention.

An embodiment of the flow chemistry setup 110 is shown in Figure 2. Slugs may be formed by introducing at least two liquids 112, 114 into a tubular reactor 116 at the same time or by introducing a dispersed phase into a continuous phase which flows within the tubular reactor, also denoted reaction-phase and carrier liquid. For introducing the two liquids 112, 114 a T-mixer 118 may be used. Formation of slugs is generally known to the skilled person. Slugs can be seen as small batch reactors which are transported through a tubular reactor one after each other. Slugs may exhibit well-defined interphase mass transfer areas and flow patterns. Two basic mass transfer mechanisms may arise: convection within the individual liquid slugs and diffusion between adjacent slugs, see J. Jovanovic et al "Liquid-liquid slug flow: Hydrodynamics and pressure drop", Chemical Engineering Science 66(1):42-54, January 2011, DOI: 10.1016/j.ces.2010.09.040. The flow chemistry in slugs may comprise segmented, and in particular, non-continuous flow chemistry, with a liquid-liquid flow pattern comprising a plurality of slugs.

The flow chemistry setup 110 may comprise a plurality of components. For example, the flow chemistry setup 110 may comprise one or more of the at least one reactor 116, at least one mixer such as the T-mixer 118, and further components not shown in Figure 2 such as at least one pump, at least one valve, at least one heating device, at least one pressure regulator, at least one analytics unit.

Back to Figure 1, the method comprises the following method steps which, specifically, may be performed in the given order. Still, a different order is also possible. It is further possible to perform two or more of the method steps fully or partially simultaneously. Further, one or more or even all of the method steps may be performed once or may be performed repeatedly, such as repeated once or several times. Further, the method may comprise additional method steps which are not listed.

The method comprises the following steps:
a) (denoted with reference number 120) determining at least one process variable by using at least one sensor 122 of the flow chemistry setup 110, wherein the process variable is determined by measuring of one or more quantities of slugs flowing through at least one tubular reactor;
b) (denoted with reference number 124) training of at least one machine-learning model 126 based on the process variable;
c) (denoted with reference number 128) determining the target parameter set by applying an optimizing algorithm in terms of at least one optimization target on the trained machine-learning model 126;
d) providing (denoted with reference number 130) the determined target parameter set and/or (denoted with reference number 131) considering the determined target parameter set for evaluating a flow chemistry setup and/or for evaluating at least one flow chemistry product.

The parameter set for the flow chemistry setup 110 may comprise settable and/or configurable and/or adjustable characteristics and/or properties of the flow chemistry setup 110. The parameter set may comprise a plurality of parameters. The parameter set may comprise parameters relating to recipe for the reaction and/or process parameters, in particular control parameters. The parameters of the parameter set of the flow chemistry setup 110 may define characteristics and/or properties of the components of the flow chemistry setup 110. The parameter set of the flow chemistry setup 110 may influence one or more of reaction time, reaction rate, slug formation and a final reaction product.

The target parameter set may be an optimized parameter set for the flow chemistry set up 110. The target parameter set may comprise at least one parameter selected from the group consisting of: flow rate of at least one pump, e.g. flow rates for each pump of the flow chemistry setup or a total flow rate; temperature; reaction time; at least one parameter from online analytics of an educt, e.g. pH value; an amount of seed particles, e.g. for the case of precipitations to control nucleation processes. The reaction time can be adjusted by changing the total flow rate. The target parameter set may comprise at least one parameter relating to a reactor size. Preferably, however, the size of the reactor may be kept constant and/or unchanged. The target parameter set may comprise a parameter relating to the size of the slugs. The size of the slugs can be adjusted by changing a ratio between a reaction-phase and a carrier liquid. Preferably, however, the size of the slugs may be kept constant such that every slug has identical conditions.

The method is a self-learning method. The method may comprise using at least one artificial intelligence (Al-) system. The method may comprise using at least one machine-learning tool, in particular a deep learning architecture. The method may be performed completely automatic. The complete automatization of the method may allow the Al-system to find the optimal parameters on its own. Specifically, the method may be self-optimizing by setting its parameters iteratively to fulfill a pre-defined final goal without human interaction. To this end, a machine learning model is used. Based on observations the machine learning model 126 facilitates the configuration of the parameters.

The process variable may be at least one quantity specifying the final reaction product. The final reaction product may be an outcome or output of the flow chemistry process, in particular to an outcome or output of the tubular reactor 116. As shown in Figure 2, the tubular reactor 116 may comprise at least one outlet 132. The process variable may be determined at the outlet 132 of the tubular reactor 116. The process variable is determined by measuring of one or more quantities of slugs flowing through the tubular reactor. The process variable may comprise at least one spectral information; at least one intensity information; at least one brightness information; at least one turbidity information, at least one colorfulness information.

The determining at least one process variable may comprise at least one process of generating at least one measurement value, in particular at least one representative result or a plurality of representative results indicating the process variable. Step a) may comprise one measurement of the process variable or multiple successive measurements of one or more quantities. The flow chemistry setup 110 comprises the at least one sensor 122, specifically a plurality of sensors. The determining of the process variable may comprise one or more of: ultraviolet and visible spectroscopy (UV-VIS) spectroscopy, Raman spectroscopy, infrared (IR) spectroscopy, nuclear magnetic resonance (NMR) spectroscopy, optical detection; fluorescence spectroscopy, mass spectrometry (MS), high performance liquid chromatography (HPLC), gas chromatography (GC); conductometry and pH-determination, calorimetry, viscosity determination, powder X-ray diffraction (PXRD), and automated titration. The sensor 122 may comprise one or more of at least one spectrometer, at least one light barrier at least one chromatograph, a viscometer, at least one titration device, at least one calorimeter. For example, the sensor 122 may be or may comprise at least one light barrier. The light barrier may be configured for determining at the outlet 132 of the tubular reactor 116 how much light passes through the final reaction product. Specifically, the sensor 122 may be configured for determining intensity of or change of intensity of at least one light beam having passed the final reaction product.

The sensor 122 may be configured for generating at least one sensor signal. The sensor signal may be or may comprise at least one electrical signal, such as at least one analogue electrical signal and/or at least one digital electrical signal. More specifically, the sensor signal may be or may comprise at least one voltage signal and/or at least one current signal. Further, either raw sensor signals may be used, or the sensor 122 may be adapted to process or preprocess the sensor signal, thereby generating secondary sensor signals, which may also be used as sensor signals, such as preprocessing by filtering or the like. For example, the preprocessing may comprise considering statistics over several slugs, denoted with reference number 134.

The flow chemistry setup 110 can assess if the flow chemistry setup 110 produces valid data. If the data is not valid the system will repeat the measurement, in particular the experiment, automatically. For example, the method may comprise at least one validation step 136. The validation step 136 may comprise validating at least one measurement value of the determined process variable. The validation may comprise determining suitability of the measurement of the process variable, in particular in view of accuracy and reliability. The validation may comprise comparing the measurement value with at least one predefined criterion. The predefined criterion may be an accuracy criterion such as tolerable measurement error. Step a) may be repeated in case the measurement value of the determined process variable is not validated, denoted with "X" and reference number 138 in Figure 1. If the measurement value is validated the measurement value may be considered as valid data point, denoted with a hook in Figure 1. If the measurement value is validated the method may proceed with step b), denoted with reference number 140.

Additionally or alternatively, the method may comprise at least one anomaly detection step. At least one algorithm may monitor the measurement signal of the sensor 122. The algorithm may be configured for determining at least one anomaly. The algorithm may be based on artificial intelligence. The algorithm may comprise at least one machine-learning algorithm. The machine-learning algorithm may be trained using historic sensor signals, wherein historic the sensor signals may comprise sensor signals having no anomaly and sensor signals having an anomaly. Step a) may be repeated in case an anomaly is detected. If no anomaly is detected the measurement is considered as valid data point. If no anomaly is detected the method may proceed with step b).

In step b) 124 the machine-learning model 126 is trained. The machine-learning model 126 may comprise at least one machine-learning architecture and model parameters. The machine-learning model may be a Bayesian machine-learning model and/or may be based on neural networks such as a reinforcement neural network. The machine-learning model may comprise at least one design of experiments method. The machine-learning model 126 may be configured for considering noise of the determined process variable. The noise can underlie different distributions, e.g., Gaussian, and types, e.g., additive and/or multiplicative. This can be handled accordingly by the machine-learning model. The machine-learning model 126 may be configured for considering constraints for the target parameter set. Parameters of the target parameter set can have constraints, e.g., upper and/or lower bounds or constant sum of flow rates of the pumps which might be considered by the machine-learning model 126.

The training may comprise building the machine-learning model 126, in particular determining and/or updating parameters of the machine-learning model 126. The machine-learning model 126 may be at least partially data-driven. The machine-learning model 126 may learn from the valid data points. The training may be performed on sensor data, such as considering the determined process variable. The training may be performed on process parameters determined in historical production runs, in particular historical production runs, having a known parameter set for the flow chemistry setup. The machine-learning model 126 may comprise data-driven model parts and other model parts based on physico-chemical laws.

The determining of the target parameter set in step c) 128 may comprise at least one optimization step 128. The optimization may comprise selecting of a best parameter set with regard to the optimization target from a parameter space of possible parameters. The optimization target may comprise at least one criterion under which the optimization is performed. The optimization target may comprise at least one optimization goal and accuracy and/or precision. The optimization target may be pre-specified such as by at least one user of the flow chemistry setup 110. The optimization target may be at least one user's specification. The user may select the optimization goal and a desired accuracy and/or precision, e.g. via at least one interface. For example, the optimization target may comprise at least one value of sensor data. A corresponding concentration of the produced fluid can be determined from the sensor data. The optimization goal may be a measurement value determined with the sensor 122, such as an intensity value determined with the light barrier, with a desired accuracy and/or precision.

The optimization may comprise application of the machine-learning model 126. Based on the current state of the machine learning model 126 and/or based on the determined process variable, the optimization algorithm can decide how to set best the parameters of the flow chemistry setup. The optimization algorithm may be or may comprise at least one algorithm for solving at least one optimization problem. The optimization may comprise solving at least one optimization problem such as at least one maximization problem or at least one minimization problem. The optimization may comprise a computational step such as computing the solution of the optimization problem. The optimization algorithm may be a Bayesian optimization, for example with a Gaussian process as surrogate model. For example, the optimization algorithm may be a reinforcement learning network. Other optimization algorithms may be possible, too. The optimization algorithm may be configured for considering noise of the determined process variable. The noise can underlie different distributions, e.g. Gaussian, and types, e.g. additive and/or multiplicative. This can be handled accordingly in step b) and/or in step c). The optimization algorithm may be configured for considering constraints for the target parameter set. Parameters of the target parameter set can have constraints, e.g., upper and/or lower bounds or constant sum of flow rates of the pumps which might be considered by the optimization algorithm.

The optimization step 128 may be dependent on the machine-learning model. However, this may not imply that every decision in every step must depend on the machine-learning model 126. For example, a plurality of experiments may be executed, wherein after running of the experiments the method is trained. For example, an average window from previous values of parameters can be used in addition. Moreover, the optimization step 128 may comprise a trade-off between exploitation and exploration of the underlying space.

In step c) 128 the optimization algorithm can determine one target parameter set or multiple target parameter sets such as a Pareto-front or a subset of a Pareto-front. In case of multiple target parameter sets step d), and in particular repeating one or more of method steps a) to d), may be executed for all configurations of target parameter sets.

Usually research projects begin with a screening task. In this stadium, the research question is clearly described which means that the optimization target is defined and a list of influencing parameters is defined. Usually the parameter space is large, which means that a lot of experiments would need to be performed. The method according to the present invention can handle this screening task automatically with a small consumption of ingredients and manual work. Specifically, as will be outlined in detail below, instructions to execute the method according to the present invention may be implemented as computer program, in particular software, such that when the program is executed by a computer or computer network, the instructions cause the computer or computer network to carry out the method according to the present invention. The flow chemistry setup 110 may be completely automatized, in a way that all relevant parameters, in particular recipe and process parameters, may be controlled by the method according to the present invention in a given range. The machine-learning model 126 may learn from the valid experimental data points and the optimization step may plan parameters for new experiments, which are necessary to achieve a given optimization target.

Step d) comprises providing 130 the determined target parameter set and/or (denoted with reference number 131) considering the determined target parameter set for evaluating a flow chemistry setup and/or for evaluating at least one flow chemistry product.

The providing 130 may comprise presenting and/or displaying and/or communicating the target parameter set, e.g. to a user. The providing 130 of the determined target parameter set may be performed using at least one output device 138. The output device 138 may comprise at least one display device.

The considering 131 of the target parameter set for evaluating a flow chemistry setup 110 may comprise setting of parameters of the flow chemistry setup in accordance with the determined target parameter set, in particular preparation of a new experiment.

As outlined above, one or more or even all of the method steps may be performed repeatedly, such as repeated once or several times. This may allow for self-learning and/or self-optimizing. Specifically, the determined target parameter set may be used as starting point for a next optimization 142. The next optimization 142 may comprise repeating method steps a) to d), wherein in step a) the process variable is determined for a flow chemistry setup 110 having parameters set to the target parameters determined in the previous round of the method. Steps a) to d) may be repeated until the process variable measured by the sensor 122 fits to the previously defined target value within a pre-defined accuracy.

In Figure 1, moreover an embodiment of an automated control system 144 for the flow chemistry setup 110 for flow chemistry in slugs is depicted. The automated control system 144 may be configured for automatically controlling the flow chemistry setup 110. The automated control system 144 comprises
- at least one communication interface 146 configured for receiving at least one process variable determined by the sensor 122, of at least one flow chemistry setup 110, wherein the process variable is determined by measuring of one or more quantities of slugs flowing through at least one tubular reactor;
- the at least one machine-learning model 126 configured for training based on the process variable;
- at least one processing unit 148 configured for determining at least one target parameter set by applying an optimizing algorithm in terms of at least one optimization target on the trained machine-learning model 126;
- the at least one output device 138 configured for providing the determined target parameter set.

The present invention may allow to speed up of research process, especially for screening purpose. Fast development of new materials may be possible. Users can concentrate on other tasks involving manual action. Flow chemistry in slugs may allow for a resource efficient research. For each experiment only a small amount of ingredients may be necessary. Using slugs may allow for simplifying optimization, in particular in view of less noise in input data used for the algorithms in steps b) and c). The slugs may provide clear limits for a measurement. No residues may be present within the slugs resulting in enhanced input data for the algorithms in steps b) and c). Thus, in comparison of continuous flow chemistry enhanced results can be achieved.

### List of reference numbers

- 110: flow chemistry setup
- 112: liquid
- 114: liquid
- 116: reactor
- 118: T-mixer
- 120: determining at least one process variable
- 122: sensor
- 124: training
- 126: machine-learning model
- 128: determining the target parameter set
- 130: providing
- 131: considering
- 132: outlet
- 134: preprocessing
- 136: validation step
- 138: not validated,
- 140: validated,
- 142: next optimization
- 144: automated control system
- 146: communication interface
- 148: processing unit

## Claims

1. Computer implemented method for determining at least one target parameter set for a flow chemistry setup (110) for flow chemistry in slugs, wherein the method is a self-learning method, the method comprising the following steps:
a) determining at least one process variable by using at least one sensor (122) of the flow chemistry setup (110), wherein the process variable is determined by measuring of one or more quantities of slugs flowing through at least one tubular reactor (116);
b) training of at least one machine-learning model (126) based on the process variable;
c) determining the target parameter set by applying an optimizing algorithm in terms of at least one optimization target on the trained machine-learning model (126);
d) providing the determined target parameter set and/or considering the determined target parameter set for evaluating the flow chemistry setup (110) and/or for evaluating at least one flow chemistry product.

2. The method according to the preceding claim, wherein the determined target parameter set is used as starting point for a next optimization.

3. The method according to any one of the preceding claims, wherein steps a) to d) are repeated until the process variable measured by the sensor (122) fits to the previously defined target value within a pre-defined accuracy.

4. The method according to any one of the preceding claims, wherein the target parameter set comprises at least one parameter selected from the group consisting of: flow rate of at least one pump; temperature; reaction time; at least one parameter from online analytics of an educt; an amount of seed particles.

5. The method according to any one of the preceding claims, wherein the process variable comprises at least one spectral information; at least one intensity information; at least one brightness information; at least one turbidity information, at least one colorfulness information.

6. The method according to any one of the preceding claims, wherein the determining of the process variable comprises one or more of: ultraviolet and visible spectroscopy (UV-VIS) spectroscopy, Raman spectroscopy, infrared (IR) spectroscopy, nuclear magnetic resonance (NMR) spectroscopy, optical detection, fluorescence spectroscopy, mass spectrometry (MS), high performance liquid chromatography (HPLC), gas chromatography (GC), conductometry and pH-determination, calorimetry, viscosity determination, powder X-ray diffraction (PXRD), and automated titration.

7. The method according to any one of the preceding claims, wherein the sensor (122) comprises one or more of at least one spectrometer, at least one light barrier, at least one chromatograph, a viscometer, at least one titration device, at least one calorimeter.

8. The method according to any one of the preceding claims, wherein the method comprises at least one validation step (136), wherein at least one measurement value of the determined process variable is validated, wherein the validation comprises comparing the measurement value with at least one predefined criterion, wherein step a) is repeated in case the measurement value of the determined process variable is not validated.

9. The method according to any one of the preceding claims, wherein the method comprises at least one anomaly detection step, wherein at least one algorithm monitors at least one measurement signal of the sensor (122), wherein the algorithm is configured for determining at least one anomaly, wherein step a) is repeated in case an anomaly is detected.

10. The method according to any one of the preceding claims, wherein the optimization target is at least one user's specification, wherein the optimization target is a concentration of at least one produced fluid.

11. Computer program for determining at least one target parameter set for a flow chemistry setup for flow chemistry in slugs, configured for causing a computer or a computer network to fully or partially perform the method according to any one of the preceding claims, when executed on the computer or the computer network, wherein the computer program is configured to perform at least steps a) to d) of the method according to any one of the preceding claims.

12. A computer-readable storage medium comprising instructions which, when executed by a computer or computer network, cause to carry out at least steps a) to d) of the method according to any one of the preceding claims referring to a method.

13. Automated control system (144) for a flow chemistry setup (110) for flow chemistry in slugs comprising
- at least one communication interface (146) configured for receiving at least one process variable determined by at least one sensor (122) of at least one flow chemistry setup (110), wherein the process variable is determined by measuring of one or more quantities of slugs flowing through at least one tubular reactor (116);
- at least one machine-learning model (126) configured for training based on the process variable;
- at least one processing unit (148) configured for determining at least one target parameter set by applying an optimizing algorithm in terms of at least one optimization target on the trained machine-learning model (126);
- at least one output device (138) configured for providing the determined target parameter set.

14. The system (144) according to the preceding claim, wherein the system (144) is configured for performing the method according to any one of the preceding claims referring to a method.

## Patentansprüche

1. Computerimplementiertes Verfahren zur Bestimmung wenigstens eines Ziel-Parametersatzes für eine Durchflusschemie-Anlage (110) für Durchflusschemie in Slugs, wobei das Verfahren ein selbstlernendes Verfahren ist, aufweisend die folgenden Schritte:
a) Bestimmen wenigstens einer Prozessvariablen unter Verwendung wenigstens eines Sensors (122) der Durchflusschemie-Anlage (110), wobei die Prozessvariable durch Messen einer oder mehrerer Größen von Slugs bestimmt wird, die durch wenigstens einen Rohrreaktor (116) strömen;
b) Trainieren wenigstens eines Machine-Learning-Modells (126) auf Basis der Prozessvariablen;
c) Bestimmen des Ziel-Parametersatzes durch Anwenden eines Optimierungsalgorithmus in Bezug auf wenigstens ein Optimierungsziel auf das trainierte Machine-Learning-Modell (126);
d) Bereitstellen des bestimmten Ziel-Parametersatzes und/oder Berücksichtigen des bestimmten Ziel-Parametersatzes zur Bewertung der Durchflusschemie-Anlage (110) und/oder zur Bewertung wenigstens eines Durchflusschemie-Produkts.

2. Verfahren nach dem vorhergehenden Anspruch, wobei der bestimmte Ziel-Parametersatz als Ausgangspunkt für eine nächste Optimierung verwendet wird.

3. Verfahren nach einem der vorhergehenden Ansprüche, wobei die Schritte a) bis d) wiederholt werden, bis die durch den Sensor (122) gemessene Prozessvariable innerhalb einer vorgegebenen Genauigkeit mit einem zuvor definierten Zielwert übereinstimmt.

4. Verfahren nach einem der vorhergehenden Ansprüche, wobei der Ziel-Parametersatz wenigstens einen Parameter aufweist, der aus der Gruppe bestehend aus der Durchflussrate wenigstens einer Pumpe, der Temperatur, der Reaktionszeit, wenigstens einem Parameter aus der Online-Analytik eines Edukts und einer Menge an Keimpartikeln ausgewählt ist.

5. Verfahren nach einem der vorhergehenden Ansprüche, wobei die Prozessvariable wenigstens eine spektrale Information, wenigstens eine Intensitätsinformation, wenigstens eine Helligkeitsinformation, wenigstens eine Trübungsinformation oder wenigstens eine Farbintensitätsinformation aufweist.

6. Verfahren nach einem der vorhergehenden Ansprüche, wobei das Bestimmen der Prozessvariablen eines oder mehrere der folgenden Verfahren umfasst:
Ultraviolett-/Sichtbar-Spektroskopie (UV-VIS), Raman-Spektroskopie,
Infrarot-(IR-)Spektroskopie, Kernspinresonanz-(NMR-)Spektroskopie, optische Detektion, Fluoreszenzspektroskopie, Massenspektrometrie (MS),
Hochleistungsflüssigkeitschromatographie (HPLC), Gaschromatographie (GC),
Leitfähigkeits- und pH-Bestimmung, Kalorimetrie, Viskositätsbestimmung,
Pulver-Röntgendiffraktometrie (PXRD) sowie automatisierte Titration.

7. Verfahren nach einem der vorhergehenden Ansprüche, wobei der Sensor (122) eines oder mehrere der folgenden Elemente aufweist: wenigstens ein Spektrometer, wenigstens eine Lichtschranke, wenigstens ein Chromatograph, ein Viskosimeter, wenigstens eine Titrationsvorrichtung, wenigstens ein Kalorimeter.

8. Verfahren nach einem der vorhergehenden Ansprüche, wobei das Verfahren wenigstens einen Validierungsschritt (136) umfasst, bei dem wenigstens ein Messwert der bestimmten Prozessvariablen validiert wird, wobei die Validierung das Vergleichen des Messwerts mit wenigstens einem vorgegebenen Kriterium umfasst, und wobei Schritt a) wiederholt wird, falls der Messwert der bestimmten Prozessvariablen nicht validiert wird.

9. Verfahren nach einem der vorhergehenden Ansprüche, wobei das Verfahren wenigstens einen Anomalieerkennungsschritt umfasst, bei dem wenigstens ein Algorithmus wenigstens ein Messsignal des Sensors (122) überwacht, wobei der Algorithmus dazu eingerichtet ist, wenigstens eine Anomalie zu bestimmen, und wobei Schritt a) wiederholt wird, falls eine Anomalie detektiert wird.

10. Verfahren nach einem der vorhergehenden Ansprüche, wobei das Optimierungsziel wenigstens eine Benutzervorgabe ist, wobei das Optimierungsziel eine Konzentration wenigstens eines erzeugten Fluids ist.

11. Computerprogramm zur Bestimmung wenigstens eines Ziel-Parametersatzes für eine Durchflusschemie-Anlage für Durchflusschemie in Slugs, eingerichtet, einen Computer oder ein Computernetzwerk bei Ausführung dazu zu veranlassen, das Verfahren nach einem der vorhergehenden Ansprüche ganz oder teilweise auszuführen, wobei das Computerprogramm dazu eingerichtet ist, wenigstens die Schritte a) bis d) des Verfahrens nach einem der vorhergehenden Ansprüche auszuführen.

12. Computerlesbares Speichermedium, aufweisend Anweisungen, die bei Ausführung durch einen Computer oder ein Computernetzwerk dazu veranlassen, wenigstens die Schritte a) bis d) des Verfahrens nach einem der vorhergehenden, auf ein Verfahren gerichteten Ansprüche auszuführen.

13. Automatisches Steuersystem (144) für eine Durchflusschemie-Anlage (110) für Durchflusschemie in Slugs, aufweisend:
- wenigstens eine Kommunikationsschnittstelle (146), die dazu eingerichtet ist, wenigstens eine Prozessvariable zu empfangen, die durch wenigstens einen Sensor (122) wenigstens einer Durchflusschemie-Anlage (110) bestimmt wird, wobei die Prozessvariable durch Messen einer oder mehrerer Größen von Slugs bestimmt wird, die durch wenigstens einen Rohrreaktor (116) strömen;
- wenigstens ein Machine-Learning-Modell (126), das zum Training auf Basis der Prozessvariablen eingerichtet ist;
- wenigstens eine Verarbeitungseinheit (148), die dazu eingerichtet ist, wenigstens einen Ziel-Parametersatz durch Anwenden eines Optimierungsalgorithmus in Bezug auf wenigstens ein Optimierungsziel auf das trainierte Machine-Learning-Modell (126) zu bestimmen;
- wenigstens eine Ausgabeeinrichtung (138), die dazu eingerichtet ist, den bestimmten Ziel-Parametersatz bereitzustellen.

14. System (144) nach dem vorhergehenden Anspruch, wobei das System (144) dazu eingerichtet ist, das Verfahren nach einem der vorhergehenden, auf ein Verfahren gerichteten Ansprüche auszuführen.

## Revendications

1. Procédé mis en œuvre par ordinateur pour déterminer au moins un jeu de paramètres cible pour une installatin de chimie en flux (110) destinée à la chimie en flux sous forme de slugs, le procédé étant un procédé auto-apprenant, ledit procédé comprenant les étapes suivantes :
a) déterminer au moins une variable de procédé à l'aide d'au moins un capteur (122) de l'installation de chimie en flux (110), la variable de procédé étant déterminée par la mesure d'une ou de plusieurs grandeurs de slugs s'écoulant à travers au moins un réacteur tubulaire (116) ;
b) entraîner au moins un modèle d'apprentissage automatique (126) sur la base de la variable de procédé ;
c) déterminer le jeu de paramètres cible en appliquant un algorithme d'optimisation, en termes d'au moins un objectif d'optimisation, au modèle d'apprentissage automatique entraîné (126) ;
d) fournir le jeu de paramètres cible déterminé et/ou prendre en compte le jeu de paramètres cible déterminé pour évaluer l'installation de chimie en flux (110) et/ou pour évaluer au moins un produit de chimie en flux.

2. Procédé selon la revendication 1, dans lequel le jeu de paramètres cible déterminé est utilisé comme point de départ pour une optimisation suivante.

3. Procédé selon l'une quelconque des revendications précédentes, dans lequel les étapes a) à d) sont répétées jusqu'à ce que la variable de procédé mesurée par le capteur (122) corresponde à une valeur cible définie préalablement avec une précision prédéfinie.

4. Procédé selon l'une quelconque des revendications précédentes, dans lequel le jeu de paramètres cible comprend au moins un paramètre choisi dans le groupe comprenant : le débit d'au moins une pompe ; la température ; le temps de réaction ; au moins un paramètre issu d'analyses en ligne d'un réactif ; une quantité de particules de germination.

5. Procédé selon l'une quelconque des revendications précédentes, dans lequel la variable de procédé comprend au moins une information spectrale, au moins une information d'intensité, au moins une information de luminosité, au moins une information de turbidité et/ou au moins une information de colorimétrie.

6. Procédé selon l'une quelconque des revendications précédentes, dans lequel la détermination de la variable de procédé comprend une ou plusieurs des techniques suivantes : spectroscopie ultraviolet-visible (UV-Vis), spectroscopie Raman, spectroscopie infrarouge (IR), spectroscopie de résonance magnétique nucléaire (RMN), détection optique, spectroscopie de fluorescence, spectrométrie de masse (MS), chromatographie liquide haute performance (HPLC), chromatographie en phase gazeuse (GC), conductimétrie et détermination du pH, calorimétrie, détermination de la viscosité, diffraction des rayons X sur poudre (PXRD), et titration automatisée.

7. Procédé selon l'une quelconque des revendications précédentes, dans lequel le capteur (122) comprend un ou plusieurs éléments choisis parmi : au moins un spectromètre, au moins une barrière optique, au moins un chromatographe, un viscosimètre, au moins un dispositif de titration, au moins un calorimètre.

8. Procédé selon l'une quelconque des revendications précédentes, dans lequel le procédé comprend au moins une étape de validation (136), dans laquelle au moins une valeur de mesure de la variable de procédé déterminée est validée, la validation comprenant la comparaison de la valeur de mesure avec au moins un critère prédéfini, l'étape a) étant répétée dans le cas où la valeur de mesure de la variable de procédé déterminée n'est pas validée.

9. Procédé selon l'une quelconque des revendications précédentes, dans lequel le procédé comprend au moins une étape de détection d'anomalie, dans laquelle au moins un algorithme surveille au moins un signal de mesure du capteur (122), l'algorithme étant configuré pour déterminer au moins une anomalie, l'étape a) étant répétée lorsqu'une anomalie est détectée.

10. Procédé selon l'une quelconque des revendications précédentes, dans lequel l'objectif d'optimisation correspond à au moins une spécification d'utilisateur, l'objectif d'optimisation étant une concentration d'au moins un fluide produit.

11. Programme informatique destiné à déterminer au moins un jeu de paramètres cible pour une installation de chimie en flux destinée à la chimie en flux sous forme de slugs, configuré pour amener un ordinateur ou un réseau d'ordinateurs à exécuter entièrement ou partiellement le procédé selon l'une quelconque des revendications précédentes, lorsque le programme est exécuté sur l'ordinateur ou le réseau d'ordinateurs.

12. Support de stockage lisible par ordinateur comprenant des instructions qui, lorsqu'elles sont exécutées par un ordinateur ou un réseau d'ordinateurs, provoquent l'exécution d'au moins les étapes a) à d) du procédé selon l'une quelconque des revendications précédentes.

13. Système de commande automatisé (144) pour une installation de chimie en flux (110) destinée à la chimie en flux en slugs, comprenant :
- au moins une interface de communication (146) configurée pour recevoir au moins une variable de procédé déterminée par au moins un capteur (122) d'au moins une installation de chimie en flux (110), la variable de procédé étant déterminée par la mesure d'une ou de plusieurs grandeurs de slugs s'écoulant à travers au moins un réacteur tubulaire (116) ;
- au moins un modèle d'apprentissage automatique (126) configuré pour être entraîné sur la base de la variable de procédé ;
- au moins une unité de traitement (148) configurée pour déterminer au moins un jeu de paramètres cible en appliquant un algorithme d'optimisation en fonction d'au moins un objectif d'optimisation au modèle d'apprentissage automatique (126) entraîné ;
- au moins un dispositif de sortie (138) configuré pour fournir le jeu de paramètres cible déterminé.

14. Le système (144) selon la revendication précédente, dans lequel le système (144) est configuré pour mettre en œuvre le procédé selon l'une quelconque des revendications précédentes relatives à un procédé.
